# EUROPEAN PATENT APPLICATION

(11) **EP 1 288 068 A1**
(43) Date of publication of application: **05.03.2003**
(21) Application number: 01120382.5
(22) Date of filing: 25.08.2001
(51) Int. Cl.: B60Q 1/04, F21V 17/00

(54) **Pedestrian protection headlamp**

(71) Applicant: Ford Global Technologies, Inc., A subsidiary of Ford Motor Company, Dearborn, Michigan 48126 (US)
(72) Inventor: Howard, Mark Shane, 52070 Aachen (DE)
(74) Representative: Drömer, Hans-Carsten, Dr.-Ing.

(57) **Abstract**

A pedestrian protection headlamp (1) comprises a headlamp cover (4) with a front surface (7) forming the lens, which cover (4) at its periphery forms a shoulder (8) and further comprises a headlamp body (5) arranged rearward to the cover's shoulder, and a sidewall (6) extends between the shoulder (8) of the cover (4) and the body (5). The invention is characterised in that the sidewall (6) is designed at least partly in a concertina fashion with several folds. The invention gives maximum freedom to the designer to achieve an optimum design with regard to pedestrian protection with very minor need of additional parts and manufacturing efforts.

## Description

This invention relates to a pedestrian protection headlamp in accordance with the preamble of Patent Claim 1.

According to EP 1048895, a headlamp includes a headlamp cover with a front surface forming the lens, which cover at its periphery forms a shoulder. The headlamp further includes a headlamp body arranged rearwardly to the cover's shoulder. The headlamp is characterised in that, from the shoulder of the cover an integrated sidewall extends rearwardly towards the joint where at the end portions of the sidewall the headlamps body is attached. This integrated sidewall has mechanically weakened deformable portions arranged between the shoulder and the joint.

Whilst such an arrangement leads to a local deformation only in the area of the weakened portions of the sidewall, the energy absorption of the headlamp is limited due to the maximum possible deformation of the weakened portions. To reduce the risk of injuries of a pedestrian when he is hit by the headlamp during a collision, the energy absorption of the headlamp should be as high as possible while the deformation of the lens cover should be as big as possible.

Accordingly, it is an object of the present invention to design a headlamp such that the risk of injuries is reduced in case of a collision with a pedestrian.

In accordance with this aspect the present invention provides a pedestrian protection headlamp according to Claim 1.

By providing a headlamp with a sidewall, which is designed at least partly in a concertina fashion with several folds, it is possible to have use the whole concertina shaped area of the sidewall for deformation during a collision with an pedestrian. This will result in a smooth impact because of a low force level during initial deformation and a high energy absorption due to the high deformation. Further advantages are that no additional package space behind the headlamp is required as the sidewall is already there, and that the concertina shaped sidewall could be tuned according to the needs with regard to load and deformation during an impact by designing the concertina folds accordingly.

In case of a collision with a pedestrian, the cover flattens and pushes on the sidewall, which results in compression forces in the sidewall. Stress concentrations occur in the edges of the concertina folds which leads to a plastic bending of the edges like of plastic hinges. The concertina folds are pressed together, hence the sidewall behave in a ductile manner and therefore deform predictably. As the sidewall begin to fold the deformable portions of the sidewall are moved inwardly and the front surface of the cover shields the edges.

By this design, several advantages with respect to a reduced risk of injuries are achieved. The joint between the cover and the headlamp body is moved further away from the front surface of the cover, therefore, the risk that a relatively sharp edge of the cover may injure the pedestrian is reduced. Additionally, the folded portions of the sidewall allow an optimisation with respect to the deformation so that the front surface of the cover can move backwards, but serves as a shield between the pedestrian and the rearward parts of the cover. An additional advantage is that the impact energy is absorbed through the deformation of the headlamp body rather than movement of the whole headlamp body.

The sidewall would normally be of the same material as the cover, but with respect to the optimisation of the deformation a plastically deformable material may be used as an intermediate between the front surface and the body.

In one preferred embodiment the invention comprises a sidewall with several concertina fashioned areas in circumferential direction, whereby circumferential means the direction along the sidewall, more or less perpendicular to the vehicles longitudinal direction. That means the concertina folds are interrupted somewhere on the sidewall, for example on the lower sidewall. This enables the tuning of the deformation behaviour of the cover, if, for example, the upper front edge of the headlamp should be softer than the lower front edge

A similar effect has another preferred embodiment, where the sidewall comprises several concertina fashioned areas in longitudinal direction, whereby longitudinal means the direction more or less parallel to the vehicles longitudinal direction. By this the deformation of the sidewall in vehicle (longitudinal) direction can be restricted to the concertina folded areas, while the rest of the sidewall remains flat. This also enables the tuning of the deformation behaviour of the cover like described above.

The optimisation of the deformation behaviour can be achieved by various means. For example, the wall-thickness may be reduced or increased in the area of the concertina folds, while the folds must not have constant thickness along the longitudinal or the circumferential direction. Also the height and the width of the folds can be adapted to the requirements.

Preferably the sidewall is a separate part, jointed at the forward end with the lens and at the rearward end with the body. Then the sidewall can be designed with the optimum shape and materials with no consideration for design or manufacturing restraints of the cover and/or the body.

In other preferred embodiments the sidewall is formed by an integral part of the body, or the sidewall is formed by an integral part of the cover, or the sidewall is formed by integral parts both of the cover and the body. This reduces complexity of the manufacturing process, as no separate sidewall is required, and only one joint between cover and body is required. Depending on the impact requirements the sidewall could be more formed as part from the body or the cover.

Further details conceming the invention are described with respect to the schematic drawings.

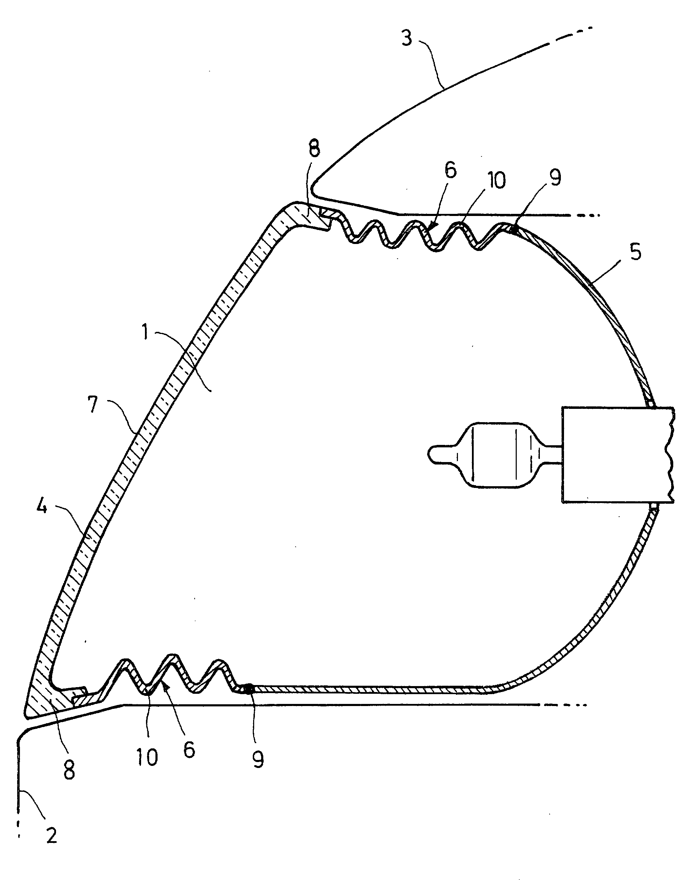

Fig.1 shows the headlamp 1 arranged in the front of a vehicle in plan view. It is located between the front 2 of the vehicle (e.g. front grille) and the side 3 of the vehicle (e.g. fender or bonnet). The headlamp 1 comprises a cover 4 and a body 5, both are connected by the sidewall 6. The cover 4 comprises a front surface 7 forming the lens and a shoulder 8 for fixing the sidewall 6. On the opposite side of the sidewall the sidewall 6 is connected to the body 5 with joint 9.

For the controlled deformation of the headlamp several folds 10 are incorporated in the sidewall 6. Due to an optimised deformation behaviour the number of folds is different between the upper part of the sidewall (4 folds) and the lower part of the sidewall (3 folds).

The sidewall 6 is shown in Fig. 1 as a separate part. According to the invention it is also possible to have the sidewall as an integral part either of the cover 4, which then would be an extension of shoulder 8, or as an integral part of the body 5, or a mix of both.

The invention gives maximum freedom to the designer to achieve an optimum design with regard to pedestrian protection with very minor need of additional parts and manufacturing efforts.

## Claims

1. Pedestrian protection headlamp (1) including a headlamp cover (4) with a front surface (7) forming the lens, which cover (4) at its periphery forms a shoulder (8) and further including a headlamp body (5) arranged rearward to the cover's shoulder, and a sidewall (6) extends between the shoulder (8) of the cover (4) and the body (5),
**characterised in that**
the sidewall (6) is designed at least partly in a concertina fashion with several folds (10).

2. Pedestrian protection headlamp as claimed in claim 1,
**characterised in that**
the sidewall (6) comprises in circumferential direction several concertina fashioned areas.

3. Pedestrian protection headlamp as claimed in claim 1 or 2,
**characterised in that**
the sidewall (6) comprises in longitudinal direction several concertina fashioned areas.

4. Pedestrian protection headlamp as claimed in one of claims 1 to 3,
**characterised in that**
the sidewall (6) is a separate part, jointed at the forward end with the cover (4) and at the rearward end with the body (5).

5. Pedestrian protection headlamp as claimed in one of claims 1 to 3,
**characterised in that**
the sidewall (6) is formed by an integral part of the body (5).

6. Pedestrian protection headlamp as claimed in one of claims 1 to 3,
**characterised in that**
the sidewall (6) is formed by an integral part of the cover (4).

7. Pedestrian protection headlamp as claimed in one of claims 1 to 3,
**characterised in that**
the sidewall (6) is formed by integral parts both of the cover (4) and the body (5).
